(19)

Europäisches
Patentamt
European
Patent Office
Office européen
des brevets

(11)  **EP 4 102 444 A1**

(12)  **EUROPEAN PATENT APPLICATION**

(43) Date of publication:
**14.12.2022  Bulletin 2022/50**

(21) Application number: **21193680.2**

(22) Date of filing: **29.08.2021**

(51) International Patent Classification (IPC):
**G06Q 50/08** (2012.01)      **G06Q 10/06** (2012.01)

(52) Cooperative Patent Classification (CPC):
**G06Q 50/08; G06Q 10/063112**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **07.06.2021  IT 202100014744**

(71) Applicant: **Ecobonusitalia.eu S.r.l.**
**33170 Pordenone (IT)**

(72) Inventor: **Terzi, Flavio**
**33170 Pordenone (IT)**

(74) Representative: **Leganza, Alessandro**
**Via Sottopasso, 14**
**36040 Torri di Quartesolo (VI) (IT)**

(54)  **SYSTEM AND METHOD FOR THE DESIGN, MANAGEMENT, AND IMPLEMENTATION OF ENERGY AND/OR ANTI-SEISMIC REDEVELOPMENT INTERVENTIONS BENEFITING FROM TAX BENEFITS AND/OR ASSIGNMENT OF TAX CREDIT AND/OR DISCOUNT ON THE INVOICE**

(57)    The present invention relates to the field of artificial intelligence systems and/or methods aimed at designing, managing and implementing energy and/or anti-seismic redevelopment interventions benefiting from tax benefits and/or assignment of tax credit and/or discount on invoices. Within this system and/or method, a critical aspect for achieving the objectives is the ability to determine the best working group, composed of professionals and companies, with the appropriate skills and technical skills to carry out the intervention. However, it is difficult to determine in advance which are the best criteria for choosing this working group, and it also wants to create a system able to evolve and improve its choice performance, based on the historical data collected. For this reason, machine-learning systems are implemented that are able to assist the system and/or method in this fundamental aspect.

EP 4 102 444 A1

**Description**

**Techinical field**

The present invention relates to the field of artificial intelligence systems and/or methods aimed at designing, managing, and implementing energy and/or anti-seismic redevelopment interventions benefiting from tax benefits and/or assignment of tax credit and/or discount on invoice.

That is, the present invention relates to the area of artificial intelligence solutions.

**Background of the invention**

The scope embraced by the system and/or method of the invention is quite vast, albeit well defined in the field of artificial intelligence.

"Artificial intelligence is a discipline belonging to computer science that studies the theoretical foundations, methodologies and techniques that allow the design of hardware systems and software program systems able to provide the electronic computer with performance that, at a common observer, they would seem to be of exclusive relevance to human intelligence. "

Artificial intelligence (AI) and related technologies have made significant progresses in recent years. In particular, neural networks have moved from specialized academic projects to being used in commercial and consumer-facing applications. These applications and technologies have the potential to solve a number of long-standing technical challenges.

Machine learning is a branch of artificial intelligence that collects methods developed in the last decades of the twentieth century in various scientific communities, under different names such as: computational statistics, pattern recognition, neural networks, adaptive filtering, dynamic systems theory, image processing, data mining, adaptive algorithms, etc.; which uses statistical methods to improve the performance of an algorithm for identifying patterns in data. In the field of computer science, machine learning is a variant of traditional programming wherein in a machine the ability to learn something from data independently, without explicit instructions, is prepared.

Machine learning is closely related to pattern recognition and computational theory of learning and explores the study and construction of algorithms that can learn from a set of data and do predictions about them, inductively constructing a model based on samples. Machine learning is used in those fields of computer science wherein designing and programming explicit algorithms is impractical.

Machine learning is related to, and often overlaps with, computational statistics, which are concerned with processing predictions using computers. Machine learning is also strongly linked to mathematical optimization, which provides methods, theories, and application domains to this field. For commercial uses, machine learning is known as predictive analysis.

WO2020106550A1 discloses a service provider matching system that receives service provider data and preferences, customer data and preferences and a customer request for a service and determines the matching scores for one or more corresponding service providers. The matching engine can use a machine learning component to improve matching over time based on the various inputs and criteria used for matching. Service providers with a score above the threshold and accepting the job are presented to the customer who selects those of interest. Following the selection, an assisted interaction may take place between the customer and one or more selected service providers to accept the terms related to the requested service, book an appointment for the service, and monitor the progress until completion.

US2017011318A1 discloses a contractor recommendation system which includes a database that stores the attributes of the contractors and, for each attribute, depending on the relative importance of each, a weight. The system uses the attributes of the contractors and the relative weights to select one or more contractors to propose to a building owner and generates a recommendation indicating the selected contractors. The building owner then selects the contractor of interest, and the system uses that selection as feedback to determine the importance of each of the contractor's attributes to the building owner and automatically updates the stored attribute weights based on to the determined importance.

US5862223A discloses a matching method and an apparatus for managing communications between an expert, having particular qualifications, and an end user looking for a service. The apparatus includes a controller having a database for storing the qualifications of the experts. The controller receives an expert request from a user, the research program identifies qualified experts to respond to the request. The request is then passed on to the expert, who transmits the response to the central controller. After the expert response is authenticated, using different levels of security from passwords to cryptography, the response is forwarded to the end user.

US10867328B2 discloses a system configured to provide cost estimates for moving services based on artificial intelligence. The system comprises one or more hardware processors configured to perform various operations such as receiving descriptive data of a building, generating, using the machine learning model, an inventory list including the items to be moved and generating a series of corresponding attributes. Finally, using the machine learning model, generating one or more estimates for moving cost estimates based on the plurality of items in the inventory list and inventory attributes.

US2014172479A1 discloses a system and method implemented by the home maintenance and assistance computer. The system includes a home profile database, containing user and home information, a service request matching processor, containing a program that compares a home maintenance service request sent from a customer with a database of a service providers and matches with the most suitable supplier, based on various criteria and an order processor that prepares a work order for the service provider. Service providers can accept, reject, or ignore the work order.

**Summary of invention**

The problem faced by the present invention is therefore that of providing a system and/or method that allows and/or facilitates the design, management, and implementation of energy and/or anti-seismic redevelopment interventions benefiting from tax benefits and/or assignment of tax credit and/or discount on the invoice.

The present invention solves the aforementioned problem through the system and/or method of the invention, as well as through the use of this system and/or method through the use of computer systems; preferably, it can be implemented as a software application running locally on a mobile device, desktop or laptop, on a server, in the cloud, or it can be configured as an online application that provides a web-based user interface.

The invention therefore makes it possible to have an absolutely versatile system and/or method, which can be used for the design, management and implementation of energy and/or anti-seismic redevelopment interventions benefiting from tax benefits and/or assignment of tax claim and/or discount on the invoice.

The system and/or method acquires and saves the data, allows the labeling of the data, automatically recognizes the type of data, extracts features and tests different networks by comparing the results identifying which are the most significant and the training methodologies best suited to the specific use case.

The system and/or method of the present invention is preferably implemented by means with a software platform, which allows the design, management, and implementation of energy and/or anti-seismic redevelopment interventions benefiting from tax benefits and/or assignment of tax credit and/or discount on the invoice, thus allowing optimization of these actions.

Further features and advantages of the system and/or method of the invention and its applications will result from the description of the examples of the embodiment of the invention, provided as an indication of the same.

**Description of the drawings**

Fig. 1 shows a simple neural network.
Fig. 2 shows the diagram which represents the structure of the application code and the iterative training process of the model.

**Detailed description of invention**

For the purpose of describing this document, the term "and/or", when used in a listing of two or more items, means that any of the items listed can be used alone, or in any combination of two or more of the items listed.

For example, whether a combination is described as containing components A, B and/or C, or, A and/or B and/or C, the composition may contain only A; only B; only C; A and B in combination; A and C in combination; B and C in combination; or A, B and C in combination.

The terms "comprises", "comprising" or any other variation thereof, mean to cover a non-exclusive inclusion, such that a system, method, use, etc. which includes a list of elements, that does not include only those elements, but may include other elements not expressly listed or related to that system, method, use, etc.

An element followed by "includes... a..." does not prevent, without further constraints, the existence of further identical elements in the system, method or use comprising the element.

An object of the present invention is a system for the design, management, and implementation of energy and/or anti-seismic redevelopment interventions benefiting from tax benefits and/or assignment of tax credit and/or discount on the invoice comprising or alternatively consisting of:

a) communication interface configured for data entry;
b) a data acquisition and processing module in communication with the communication interface a) configured for:

i. receiving a set of data representing the project profiling;
ii. receiving a data set representing the profiling of professionals;
iii. receiving a data set representing the company profiling;
iv. performing the matching of the data acquired in phases i., ii. and iii.;
v. generating an output data set of the results of phase iv.;

c) a web connection module configured for connecting the module b) to the internet;
d) a display and/or printing unit designed to be connected to the acquisition and processing module b) and designed to display and/or print the obtained output.

According to an embodiment of the invention, the receipt of a data set of steps i. and/or ii. and/or iii. can be done by entering the required data, as reported below, via electronic media, such as computers, smartphones, tablets.

According to an embodiment of the invention, the data acquisition and processing module b), in communication with the communication interface a), can be a platform and/or software configured to carry out the steps of the invention.

A platform is a hardware and/or software base on which programs or applications are developed and/or executed; it can also indicate an execution environment that includes hardware and operating system and possibly specific middleware elements, server applications and other tools to support the execution of programs.

Operating platforms, hardware and software that are interconnected can be distinguished: the operating platform is specific to a certain type of hardware architecture, depending on the fundamental instructions (instruction set) of the processor and forming a single execution environment that distinguishes the system.

The hardware platform is the hardware on which a certain operating system and a certain set of application programs are made to run (typically the processor architecture).

The software platform indicates the type of framework or the basic software system on which the programs and applications are developed and/or executed (execution environment, e.g. Java platform, Wiki platform, forum platforms such as VBulletin, blogging platforms and dynamic websites (CMS) such as WordPress, Joomla!, Drupal and Sharepoint, LAMP and WAMP platforms for websites, video sharing platforms such as YouTube, social networking and microblogging platforms such as Facebook and Twitter, e-commerce such as Ebay etc.).

The operating platform is the type of software platform that includes the operating system, which is built from the processor's elementary instructions (instruction set).

Within the system and/or method of the invention, a critical aspect for achieving the objectives, it is the ability to determine the best work group (i.e. ideal work team), composed of professionals and companies, with the adequate skills and technical skills for the implementation of the design, management and implementation of energy and/or antiseismic redevelopment interventions benefiting from tax benefits and/or assignment of tax credit and/or discount on the invoice.

System and/or method of the invention which, through the application of a machine learning software algorithm, by replicating the simple neural network model, applied for the first time to the construction sector, allows to select of an ideal work team, made up of professionals and companies, with the appropriate skills and technical skills for the effective implementation of the building intervention for energy and/or anti-seismic redevelopment.

However, it is difficult to determine a priori which are the best selection criteria of this working group, and it is also desired to create a system able to evolve and improve one's own choice performance, on the basis of the historical data collected. For this reason, the system and/or method of the invention is based on machine-learning able to assist the platform in this fundamental aspect.

According to a preferred form of the invention, the data acquisition and processing module b), that is the platform and/or software, could include machine-learning systems and/or algorithms.

According to a preferred form of the invention, the data acquisition and processing module b), comprises machine-learning algorithms.

According to a preferred form of the invention, the data acquisition and processing module b), that is the platform and/or software, can comprise any algorithm able to generate predictions and estimates on the basis of a set of data input, i.e. the data of phases i., ii., iii..

According to a preferred form of the invention, the data acquisition and processing module b), comprises any algorithm able to perform the matching on the basis of a set of input data of phases i., ii., iii..

The system of the present invention, comprising or, alternatively, consists of a data acquisition and processing module, in communication with the communication interface a), configured for:

i. receiving a data set representing the project profiling;
ii. receiving a data set representing the profiling of professionals;
iii. receiving a data set representing the company's profiling;
iv. performing the matching of the data acquired in phases i., ii. and iii.;

v. generating an output data set of the results of phase iv.;

According to a preferred form of the invention, the data collection of steps i., ii., iii. starts from a timely profiling of users and/or customers, that is the projects, and of the companies surveyed, that is professionals and companies.

According to the invention, by users and/or customers, that is the projects of phase i., it means the beneficiaries of tax benefits and/or assignment of tax credit and/or discount on the invoice, that is a citizen or an entity that needs to carry out an energy efficiency intervention (i.e. energy and/or anti-seismic requalification intervention) on its building, outside the exercise of business activities, arts and professions.

According to the invention, a company surveyed is divided into a single professional, design studio/general contractor, business and/or company.

According to the invention, for professionals, i.e. the professionals of phase ii., it means single professional, design studio/general contractor; wherein a single professional is a technician who works individually on the design and implementation of a project; a design studio/general contractor is a set of one or more qualified technicians and a construction manager and a designer, a multi-functional design studio, or a general contractor.

According to the invention for enterprise and/or company, i.e. the companies of phase iii., It is a specialized enterprise, which offers solutions and products in the sector of energy efficiency of buildings, construction, plant engineering and the like, which normally operates in subcontracting of other general contractors; he/she has not responsibility for project management and coordination but only functions for carrying out tasks and works.

When registering, i.e. receiving the data set representing the project profiling (phase i.), as well as entering the personal data (general customer data, name, surname, place, etc.), requests from customers a series of detailed information regarding the building, the type of intervention.

For professionals and companies, on the other hand, information relating to the structure of the organization, resources, skills, qualifications are collected, these represent the data received in phase ii. and iii..

According to an embodiment of the invention, the data collected in phases i. that is the profiling of users and/or customers, that is the projects, make up and/or create and/or are part and/or are included in a database of customers and/or projects.

According to an embodiment of the invention, the data collected in phase ii., i.e. the profiling of professionals, compose and/or create and/or are part and/or are included in a database of professionals.

According to an embodiment of the invention, the data collected in phase iii., i.e. the profiling of companies and/or businesses, make up and/or create and/or are part of and/or are included in a database of companies and/or businesses.

According to an embodiment of the invention, by means of the machine learning algorithm, i.e. the matching algorithm, the comparison and/or superimposition and/or choice is between the data of phases i., ii. iii., i.e. between the database of customers and/or projects, the database of professionals and the database of companies and/or businesses; to identify the best combination of project requirements and skills of professionals and/or companies, that is available suppliers, and thus identifying the best work team.

These "qualifying" profiling data will be used by the machine learning algorithm, i.e. the matching algorithm, of the platform to identify the best combination of project requirements and skills of professionals and/or companies, that is available suppliers.

According to a preferred embodiment of the invention, the data set acquired by module b) in phase i., i.e. the project profiling, includes descriptive data of the type of building, of the energy attestation, of the seismic attestation, of the heating system, of the required intervention, according to table 1 below:

Table 1

| CUSTOMER and/or PROJECT | |
| --- | --- |
| Details | Detail Data |
| Type of building | Single-family<br>Condominium<br>Two-family<br>Public building /Social housing |
| Attestations Energy/Seismic | EPC/Seismic class |
| Thermal system | Various data of the thermal system |
| Required intervention | Replacement of thermal system<br>External envelope thermal insulation (cladding) |

(continued)

| CUSTOMER and/or PROJECT | |
|---|---|
| Details | Detail Data |
| | replacement of winter/summer air conditioning systems |
| | replacement of domestic hot water systems (DHW) |
| | replacement of fixtures, |
| | installation of photovoltaic/solar thermal systems |
| | installation of storage systems (batteries) |
| | installation of electric charging stations |
| | building renovation in general |
| | seismic redevelopment |
| | other interventions of energy efficiency were carried out in the past |

According to a preferred embodiment of the invention, the data set acquired by module b) in phase ii., i.e. the profiling of professionals, includes descriptive data of the professional title, technical skills, professional qualifications, registers professional, professional roles, professional insurance, operating range, according to table 2 below:

Table 2

| PROFESSIONAL | |
|---|---|
| **Details** | Detail Data |
| **Professional titles** | - Surveyor<br>- Architect<br>- Engineer<br>- Accountant<br>- Other: specifying |
| **Competenze Tecniche** | - Eco-bonus management<br>- Thermal account management<br>- Building renovation practice management<br>- Condominium administrator<br>- Tax asseverations,<br>- Commercial endorsements<br>- Civil building design<br>- Industrial building design<br>- Cladding-thermal insulation design<br>- Report pursuant to law 10<br>- Building compliance<br>- Cadastral compliance<br>- Energy certification<br>- Energy diagnosis<br>- Energy efficiency<br>- Plant design<br>- Thermotechnical design<br>- Electrical design<br>- Electrical compliance (IEC standards)<br>- Seismic design |

(continued)

| PROFESSIONAL | |
|---|---|
| **Details** | Detail Data |
| **Professional qualifications** | - Energy certifier<br>- Energy Manager<br>- Safety manager<br>- Construction management<br>- Thermotechnical certifier,<br>- Project Management<br>- Customer management<br>- EPCs management<br>- Accountant<br>- Fire prevention professional (pursuant to Law 818/84) |
| **Professional registers** | - Surveyors register of<br>- Registration n.<br>- Architects register of<br>- Registration n.<br>- Engineers register of<br>- Registration n.<br>- Accounts register of<br>- Registration n.<br>- Other. Specifying<br>- No professional register |
| **Professional roles** | - Energy certifier<br>- Safety manager<br>- Construction management,<br>- Construction site management<br>- Building compliance<br>- Building designer<br>- Thermotechnical designer<br>- Plant designer<br>- Photovoltaic-storage designer<br>- Structure designer<br>- Project asseverator<br>- Project management and coordination<br>- Fire prevention professional (pursuant to Law 818/84)<br>- Customer management<br>- Partner company management<br>- Accountant<br>- Electrical designer |
| **Proofessional Insurance** | Number and Price Ceiling |
| **Operating range** | - Local (by 20Km)<br>- Provincial (by 50km)<br>- Regional (by 100km)<br>- National (throughout the territory) |

According to a preferred embodiment of the invention, the data set acquired by module b) in phase iii., i.e. the company profiling, includes descriptive data of the certifications, of the organic structure and resources, of the average value of orders, average turnover, professional roles, skills and scope of work, operating range, according to table 3 below:

Table 3

| COMPANY | |
|---|---|
| **Details** | Detail Data |
| **Certifications** | - ISO 9001<br>- ISO 14001<br>- ISO 50001 |
| **Organic structure & resources** | - Technicians-Surveyors<br>- Architects<br>- Engineers<br>- Project managers - Order management,<br>- Accounts - sales operations,<br>- Administration & control,<br>- Back office assistant, |
| **Value medium order** | - < 50K €<br>- 50K- 100K €<br>- 100K-200K €<br>- 200-300K €<br>- >300K € |
| **Average turnover Last 2 years:** | - < 500K €<br>- 500K- 1000K €<br>- 1000K-2000K €<br>- 2000K-3000K €<br>- 3000K-5000K<br>- >5000K € |
| **Professional roles** | - Energy certifier<br>- Safety manager<br>- Construction management<br>- Construction site management<br>- Building compliance<br>- Building designer<br>- Thermotechnical designer<br>- System designer<br>- Photovoltaic- storage designer<br>- Structure designer<br>- Project asseverator<br>- Project management and coordination<br>- Fire prevention professional (pursuant to law 818/84)<br>- Customer management<br>- Partner company management,<br>- Accountant<br>- Electrical designer |

(continued)

| COMPANY | |
|---|---|
| **Details** | Detail Data |
| **Skills and scope of works** | - Centralized and/or autonomous heating systems<br>- Structural building works construction and renovation in general<br>- Insulation interventions of the external/internal envelope<br>- Winter-summer air conditioning systems<br>- domestic hot water systems (DHW)<br>- Construction and implementation of fixtures-doors-shutters<br>- Photovoltaic/solar thermal systems<br>- heat pump systems - Microgeneration<br>- Installation of storage systems<br>- Installation of electric charging stations<br>- Seismic redevelopment |
| **Operating range** | - Local (by 20Km)<br>- Provincial (by 50km)<br>- Regional (by 100km)<br>- National (throughout the territory) |

According to a preferred embodiment of the invention, the data set acquired by module b) comprises:

- in phase i. descriptive of the type of building, energy certification, seismic certification, thermal system, required intervention;
- in phase ii. descriptive of professional title, technical skills, professional qualifications, professional registers, professional roles, professional insurance, operating range;
- in phase iii. descriptive of certifications, staff structure and resources, average order value, average turnover, professional roles, skills and scope of work, operating range.

The term descriptive refers to a data set and/or information and/or features that describe a characteristic and/or an area.

According to a preferred embodiment of the invention, the data set acquired from module b) in phase i. comprises: descriptive of the type of building (single-family, condominium, two-family, public building/social housing, property size, number of windows, cadastral data, cadastral compliance, etc.), energy certification (energy class A, B, C, D , E, etc.), seismic certification (seismic class), thermal system (various data of the thermal system, number of radiators, size, type, etc.), required intervention (replacement of thermal system, external envelope thermal insulation (cladding), replacement of winter/summer air conditioning systems, replacement of domestic hot water systems, replacement of fixtures, installation of photovoltaic/solar thermal systems, installation of storage systems (batteries), installation of electric charging stations, building renovation in general, seismic redevelopment, etc.).

According to a preferred embodiment of the invention, the data set acquired from module b) in phase ii. comprises descriptive of professional qualifications (surveyor, architect, engineer, accountant, etc.), technical skills (eco-bonus management, thermal account management, building renovation practice management, condominium administrator, tax asseverations, commercial endorsements, civil building design, industrial building design, cladding-thermal insulation design, report pursuant to law 10, building compliance, cadastral compliance, energy certification, energy diagnosis, energy efficiency, plant design, thermotechnical design, electrical design, electrical compliance, seismic design, etc.), professional qualifications (energy certifier, energy manager, safety manager, construction management, thermotechnical certifier, project management, customer management, EPCs management, accountant, fire prevention professional (pursuant to Law 818/84, etc.), professional registers (surveyors registration no., architect registration no., engineer registration no., accountants registration no., etc.), professional roles (energy certifier, safety manager, construction management, construction site management, building compliance, building designer, thermotechnical designer, plant designer, photovoltaic-storage designer, structure designer, project asseverator, project management and coordination, fire prevention professional (pursuant to Law 818/84), customer management, partner company management, accountant, electrical designer, etc.), professional insurance, operating range (local (within 20km) , provincial (within 50km), regional (within 100km), national (throughout the territory)).

According to a preferred embodiment of the invention, the data set acquired from module b) in step iii. includes descriptive of certifications (ISO 9001, ISO 14001, ISO 50001, etc.), organic structure and resources (technicians, surveyors, architects, engineers, project managers, order management, sales, administration & control, back office assistant, etc.), value medium order (<50K €, 50K-100K €, 100K-200K €, 200-300K €, > 300K €), average turnover (<500K €, 500K-1000K €, 1000K-2000K €, 2000K-3000K €, 3000K - 5000K, > 5000K €), professional roles (energy certifier, safety manager, construction management, construction site management, building compliance, building designer, thermotechnical designer, system designer, photovoltaic- storage designer, structure designer, project asseverator, project management and coordination , fire prevention professional (pursuant to law 818/84), customer management, partner company management, accountant, electrical designer, etc.), skills and scope of work (centralized and/or autonomous heating systems, boilers, structural building works construction, renovation, insulation interventions of the external/internal envelope, winter-summer air conditioning systems, domestic hot water systems, construction and implementation of fixtures-doors-shutters, photovoltaic/solar thermal systems, heat pump systems, installation of storage systems, installation of electric charging stations, seismic redevelopment, etc.), operating range (local (within 20km), provincial (within 50km), regional (within 100km), national (throughout the territory)).

All this information provides the starting data base that can allow the system and/or method of the invention to determine the matching between the data provided (phase i., ii., iii.) thus, defining the optimal working group for the realization of a specific project.

According to a preferred embodiment of the invention, in phase iv. of module b) of the system, the matching of the data acquired in phases i., ii. and iii. is carried out.

According to an embodiment of the invention, phase iv. takes place by mean of the use of software, or machine learning software.

According to an embodiment of the invention, in phase iv. of module b) of the system, the matching of the data acquired in phases i., ii. and iii. Is carried out, by means of the use of software, that is machine learning software, which include machine learning algorithms and/or simple neural networks.

According to a preferred embodiment of the invention, in the following description of the invention, the terms machine learning model and machine learning algorithm are used as synonyms, that is used to indicate the same concept.

According to a preferred embodiment, in the following description of the invention the term machine learning model means to comprise machine learning algorithms and/or deep learning algorithms (i.e. deep learning), or machine learning and/or deep learning models.

Machine learning (i.e. machine learning and/or machine learning models) is a branch of artificial intelligence that collects developed methods, under different names such as: computational statistics, pattern recognition, artificial neural networks, adaptive filtering, dynamic systems theory, image processing, data mining, adaptive algorithms, etc.; which uses statistical methods to improve the performance of an algorithm for identifying patterns in data. In the field of computer science, machine learning is a variant of traditional programming wherein in a machine, the ability to learn something from data autonomously, without explicit instructions, is prepared.

According to an embodiment of the invention, machine learning (i.e. machine learning and/or machine learning model) is developed by means of the use of artificial neural networks and/or adaptive algorithms and/or machine learning algorithms and/or machine learning algorithms.

Machine learning is closely related to pattern recognition and computational theory of learning and explores the study and construction of algorithms that can learn from a data set and make predictions about them, inductively constructing a model based on samples.

Examples of machine learning algorithms may include a support vector machine (SVM), a Bayes naive classification, a randon forest, supervised learning algorithm or unsupervised learning algorithm for classification and regression. Machine learning algorithms can be trained (i.e. optimized, training) using one or more optimization datasets.

In some embodiments, the machine learning algorithm uses regression modeling, wherein relationships between prediction variables and dependent variables are determined and weighted.

In some embodiments, a machine learning algorithm is used to perform the matching between project, professional, firm/business profiling data.

Below is a non-limiting example of a linear model algorithm:

F.Matching.Weight = A0 + A1(X1) + A2(X2) + A3(X3) + A4(X4) + A5(X5) + A6(X6) + A7(X7) wherein Ai (A1, A2, A3, A4, A5, A6, A7) are weights or coefficients found during the regression odellation; and Xi (X1, X2, X3, X4, X5, X6, X7) are collected data. Any number of variable Ai and Xi can be included in the model.

The term "neural network" can be used herein to refer to an interconnected group of processing nodes (or neuron models) that collectively operate as a software application or process that controls a function of a computing device and/or generates an overall inference result in output. Individual nodes in a neural network can attempt to emulate biological neurons by receiving input data, performing simple operations on the input data to generate output data, and pass the output data (also called "activation") to the next node in the network.

The parameters collected in phases i., ii. and iii. registration of the various profiles, are processed by means of the use of matching software algorithms.

The matching logic of the platform and/or system and/or method of the invention represents the distinctive and innovative factor that characterizes the invention and differentiates it from current solutions on the market.

Within this platform and/or system and/or method of the invention, a critical aspect for achieving the objectives is the ability to determine the best working group, composed of professionals and companies, with the appropriate skills and technical skills for the implementation of the intervention, that is project.

However, it is difficult to determine a priori which are the best criteria for choosing this working group, and it also want to create a system and/or method able to evolve and improve one's choice performance, based on historical data collected.

For this reason, the system and/or method of the invention provides for the use of machine-learning systems able to assist the platform and/or system and/or method of the invention in this fundamental aspect.

According to a preferred embodiment of the invention, the platform and/or system and/or method is made using software based on the use of machine learning frameworks; for example, Microsoft's ML.NET.

According to a preferred embodiment of the invention, the platform and/or system and/or method is implemented by means of software based on the use of frameworks able to add machine learning functionalities to .NET applications, in online scenarios (for example on the cloud) or offline. With this feature, it can make automatic predictions using the available data. Such applications use models in the data to make predictions rather than having to be explicitly programmed.

According to a preferred embodiment of the invention, in phase iv. of module b) of the system, the matching of the data acquired in phases i., ii. and iii. is carried out, identifying the ideal matching between: project requirements, professional skills and business features.

According to an embodiment of the invention, the matching mechanism follows the operating principles of neural networks, which in computer science is implemented through a mathematical model that is inspired by the operation of biological neuronal networks.

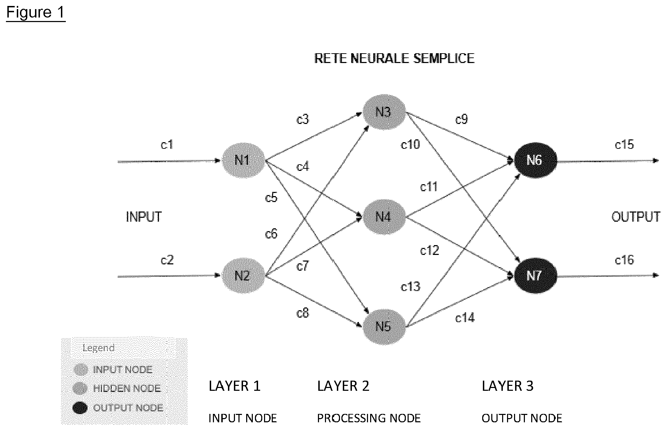

According to a preferred embodiment of the invention, the implemented neural network model is that of a simple neural network, that is: an input level, an output level of the system and, finally, a single intermediate level of computation (see Fig 1.).

According to a preferred form of the invention, the matching of the data acquired in phases i., ii. and iii. takes place through the logic of simple neural networks.

Simple neural networks are expressed by linear algorithms.

According to a preferred form of the invention, the matching of the data acquired in phases i., ii. and iii. takes place through the logic of simple neural networks that is through linear algorithms.

According to a preferred form of the invention, the matching of the data acquired in phases i., ii. and iii. takes place through linear algorithms.

According to a preferred form of the invention, the matching of the data acquired in phases i., ii. and iii. takes place through machine learning software based on the logic of linear neural networks that is on linear algorithms.

The data collected in phases i., ii., iii. they are logically grouped into categories which will then be compared, in the matching phase, between data of "comparable" categories.

An algorithm is the mathematical formula that is performed to produce a model. Different algorithms produce models with different features.

Linear algorithms produce a model that calculates scores from a linear combination of the input data and a set of weights. Weights are parameters of defined model.

In general, linear algorithms are scalable and fast, easy to train and cheap in terms of predictions. Scalability is based on the number of features and approximated by the size of the training set.

The training set is a list of practical examples on which to build a knowledge base or a decision algorithm in machine learning.

The training set consists of a series of situations that photograph some features of the environment.

Before training with a linear algorithm, the features and/or data, and therefore the categories in which they are grouped, must be normalized. This prevents that one feature havs more influence on the result than the others. Following, the table shows the set of categories:

| Parameter - Categories | | | |
|---|---|---|---|
| **Customers and/or Projects** | **Professionals** | **Professional Office** | **Company and/or Society** |
| Building address | Office address | Office address | Office address |
| Tipologia immobile | Operative range | Value medium order | Value medium order |

(continued)

| Parameter - Categories | | | |
|---|---|---|---|
| Customers and/or Projects | Professionals | Professional Office | Company and/or Society |
| Required intervention on | Competences | Operative range | Operative range |
| Type of intervention | Qualifications | Competences | Competences |
| | | Qualifications | Qualifications |
| | | Structure & resources Network (by 20 Km) | Structure & resources Network (by 20 Km) |

The categories and/or data are normalized by associating them with a "weight" (weight, W) from 0 to 1, with jumps of 0.25, which distinguishes their preponderance in terms of preference and priority over another category. The assigned weight will give an indication of the importance of the category compared to others. For example:

| Parameters | Value | Weight |
|---|---|---|
| Office Address | 2 | W_(Office) |
| Operative range | 2 | W_(Range) |
| Network (by 20 Km) | 1,5 | W_(Netw) |
| Value medium order | 1 | W_(Comm) |
| Competences | 2 | W_(Comp) |
| Professional Qualifications | 1,5 | W_(Qualif) |
| Certifications | 1,5 | W_(Cert) |
| Structure & resources | 1,25 | W_(Struct) |
| Professionale role | 1,5 | W_(Role) |

Linear algorithms perform more passages on the training data. If the data set can fit in memory, the addition of a cache checkpoint to the ML.NET pipeline before queuing the training algorithm will make the training run faster.

The machine learning model specifies the steps necessary to transform the input data into an estimate, training this custom model by specifying an algorithm or it is possible to import TensorFlow and ONNX models with preliminary training.

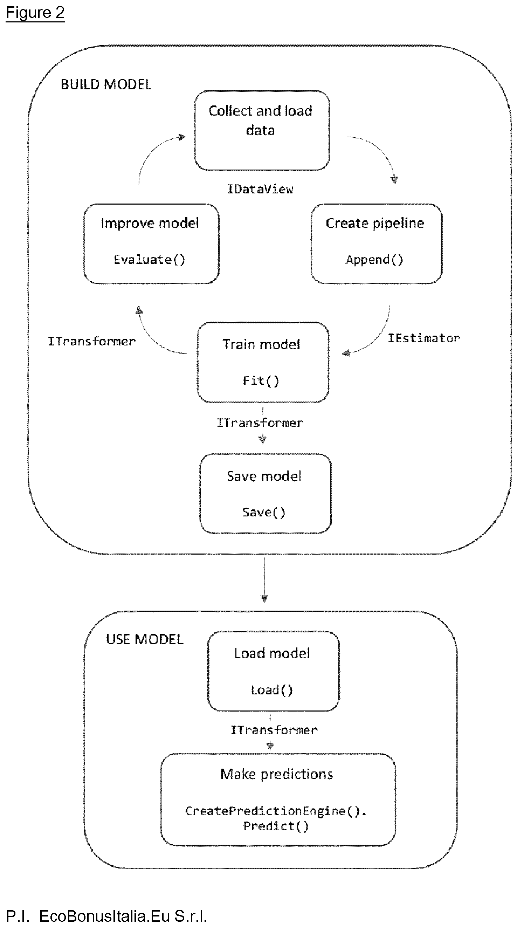

The diagram of fig. 2 represents the structure of the application code and the iterative process of training the model (See Fig. 2).

According to an embodiment of the invention, the system and/or method and/or platform and/or software is made using training algorithms for the machine learning model.

For the realization of the software, it is possible to choose between different training algorithms. The choice depends on the problem being solved, the features of the data and the available computing and storage resources. It is important to note that training of a machine learning model is an iterative process.

According to a preferred embodiment of the invention, the machine learning algorithm is a linear algorithm, that is a training algorithm.

According to a preferred embodiment of the invention, the linear algorithm, that is the training algorithm, is a linear function (matching function, i.e. F. Matching or F_Matching) of the type:

$$F\_Matching = Weight\_Sede(\textstyle\sum Value\_sede) + Weight\_Raggio(\sum Value\_raggio) +$$

$$Weight\_Netw(\textstyle\sum Value\_netw) + Weight\_Comm(\sum Value\_comm) + Weight\_Compet(\sum Value\_c$$

$$ompet) + Weight\_Qtifualif(\textstyle\sum Value\_qualif) + Weight\_Certif((\sum Value\_certif) + Weight\_Strutt((\sum$$

$$Value\_strutt) + Weight\_Ruolo(\textstyle\sum Value\_ruolo)$$

Where Weight means weight.

According to a preferred embodiment of the invention, the linear algorithm is a linear function of the type:

$$F\_Matchig = \sum_1^n F\_Matching\_i = \begin{bmatrix} F\_Matching(Sede) \\ F\_Matching(Raggio) \\ F\_Matching(Netw) \\ F\_Matchiong(Comm) \\ F\_Matching(Comp) \\ F\_Matching(Qualif) \\ F\_Matching(Cert) \\ F\_Matching(Strutt) \end{bmatrix} = \begin{bmatrix} W\_(Sede) \\ W\_(Raggio) \\ W\_(Netw) \\ W\_(Commessa) \\ W\_(Competenze) \\ W\_(Qualifiche) \\ W\_(Certif) \\ W\_(Struttura) \end{bmatrix} \begin{bmatrix} Value\_Sede\_1 & \cdots & Value\_Strutt\_1 \\ \vdots & \ddots & \vdots \\ Value\_Sede\_n & \cdots & Value\_Strutt\_n \end{bmatrix}$$

The values found by F_Matching can be higher than 1, due to the effect of the Weigths used. In order to be able to represent in % values the degree of matching found, the F_Matching is "limited" through the Sigma function, which "squashes" the values between 0 and 1.

The values of the F_Matching, that is the matching, squashed between 0 and 1 will thus be more easily represented as the output of phase v. in % form.

According to a preferred embodiment of the invention, in phase v. of module b) of the system, an output data set of the results of phase iv is generated.

According to a preferred embodiment of the invention, the output data set of phase v. represents the ranking of matching between the data of phases i., ii. and iii..

The matching between the data of phases i., ii. and iii. it is expressed with a "compatibility factor" (i.e. F_Matching) expressed in %, i.e. it composes the output of phase v., which consists of a decreasing list of compatibility between the data of phases i., ii., iii..

The matching function and/or phase, or phase iv., finds its applicability in the system and/or method and/or platform of the invention in at least two phases, i.e. two comparisons and/or overlaps and/or matching between the data of phases i., ii. and iii..

Following access to the platform by a professional or a company, the available projects already selected according to an ideal matching between the requirements of the project and the features of the professional or company indicated in the registration are proposed by the system and/or method of the invention, i.e. the output of phase v. is displayed. highlighting the ranking of the matching between the data of phase ii. or iii. and the data of phase i..

Similarly, to access to the platform by a customer and/or project, the available professionals and/or companies already selected according to an ideal matching between the project requirements and the features of the professional indicated during registration are proposed by the system and/or method of the invention, i.e. the output of phase v. is displayed, highlighting the ranking of the matching between the data of phase i. and the data from phase ii. and/or the data of phase iii..

The information collected during the registration phase, phases i., ii., iii. of module b), provide the starting data base that can allow an "expert system" such as that of the invention to determine the optimal working group for the realization of a given project, by matching the contents of the project, professionals and companies. databases

The ideal degree of matching between projects/professional and/or company is proposed in terms of % according to a scale in descending order: the % expresses the compatibility factor (i.e. F_Matching) of the project with the features and skills indicated in the profile of the professional or company/firm.

The system and/or method of the invention may include a further phase of receiving data, these data describe the Key Performance Indicators (KPIs) that measure the performance of professionals and/or companies that are carrying out the project.

According to a preferred form of the invention, the data acquisition and processing module b), may include a further data reception phase vi., wherein data describing the Key Performance Indicators (KPIs) are received.

These KPIs are collected during the development of the projects, providing data on the basis of: times used for the workflow status changes, respect and modification of the set times, success percentage in the budgeting phase, customer satisfaction, formal correctness of the produced documentation, timely use of the platform, analysis of the checklist of activities.

These KPIs can be used to implement and improve the matching functions, helping to define the best solution for completing the project, i.e. for identifying the best work team.

According to a preferred embodiment of the invention, in phase iv. of module b) of the system, the matching of the data acquired in phases i., ii., iii. and in addition vi is carried out.

According to an embodiment of the invention, in phase iv. of module b) of the system, the matching of the data acquired in phases i., ii., iii. and in addition vi. Is carried out, through the use of software, that is machine learning software, which include machine learning algorithms and/or simple neural networks.

A program, in computer science, is an algorithmic procedure applied to a given problem to be automated and typically encoded in a series of lines of code written in a certain programming language by a programmer in the programming phase to form a software. The software can be executed by a computer, receiving certain data as input and returning any results obtained as a result of the execution/processing of its instructions as output.

A program is a set of lines of code which in turn consist of a set of instructions. The problem must be solved through an algorithm in order to a programmer can encode it into instructions in a programming language. In this phase, called programming, the source code of the program is created which defines its execution flow.

The term "application", in computer science, identifies a software installed or a series of software being run on a computer with the aim and result of making possible one or more functionalities, services or tools that are useful and selectable on request of the user through the user interface, often through processing starting from an input provided by the user interacting with it.

Only the operating systems and their internal components are not considered applications as they are necessary for the intrinsic functioning of the basic tools of the computer platform. Nowadays the hardware component has lost its relevance so much that a synonym for application is program. The starting assumption can therefore also be expressed in terms of an application program, i.e. programs that are not necessary for the functioning of the computer as opposed to the basic software, i.e. all the basic instructions that a computer needs (for example the operating system).

In computer science, middleware refers to a set of computer programs that act as intermediaries between different applications and software components. Middlewares are often used as support for complex distributed systems with multitier architectures. The integration of processes and services residing on systems with different technologies and architectures is another function of middleware applications. They identify a series of tools such as DBMS, web server, application server, content management systems and other tools based on the concept of developing and publishing applications and contents.

In computer science and in particular in web programming, a web application generically indicates all distributed applications, i.e. applications accessible/usable via the web by means of a network, such as an intranet within a computer system or the internet, that is in a typical client-server architecture, offering certain services to the client user.

The term "client-server system" indicates a network architecture wherein a client or terminal computer generically connects to a server for the use of a certain service, such as for example the sharing of a certain hardware/software resource with other clients, relying on the underlying protocol architecture.

A server is a computer component or subsystem for processing and managing information traffic that provides, at a logical and physical level, any type of service to other components (typically called clients) who request it through a computer network, within a computer system or even directly locally on a computer.

Software, which can be translated as logic component, computer program or logic support, is the set of intangible components of an electronic processing system. In particular, in computer science, these are understood to be the instructions of a program encoded in machine language or in programming language (source code) and stored on one or more physical supports, in the form of executable code.

Software means the set of programs used in a data processing system that manages the operation of a computer. A distinction is made between: system software, i.e. that relating to the operating system of the electronic computer; basic software, that is, a set of general utility programs and procedures that can be used by other programs; application software that is related to application programs designed for particular functions which can be for example writing, image processing, data management and other.

According to a preferred embodiment of the invention the platform, constituting the module b), is developed on VPS (Virtual Private Server) on which all the software components necessary for development are installed. Therefore, the management system will be a web solution that can be reached through an IP address.

Being a web solution, HTML language will be used for its implementation, managing the graphic style through CSS and possibly performing operations defined by functions in Java script.

CSS is a language used to define the formatting of HTML, XHTML and XML documents, such as websites and related web pages.

Java script is an object-oriented and event-oriented programming language, commonly used in client-side Web programming (later also extended to the server side) for the creation, in websites and web applications, of interactive dynamic effects through scripts invoked by events triggered in turn in various ways by the user on the web page in use (mouse, keyboard, page loading etc...).

The system of the present invention, comprising or, alternatively, consists of a communication interface a) configured for data entry.

The communication interface a) comprising or, alternatively, consists of a video interface, i.e. a display device, and a data entry interface, in communication with the video interface, suitable for allowing and/o receive data from a third source (external to the system and/or internal to the system).

The data entry interface comprising or, alternatively, consists of a hardware device, for example a keyboard and/or any device suitable for digitizing data, and a software and/or program suitable for enabling the insertion of data in the system of the invention.

The system of the present invention, comprising or, alternatively, consists of a web connection module configured to connect the module b) to the internet.

The web connection module c) comprising or, alternatively, consists of a set of software and hardware infrastructures designed to allow the system of the invention to connect and therefore interact with the web and/or internet.

The system of the present invention can comprise or, alternatively, be constituted by a network connection module configured to connect the module b) to the web and/or internet.

The system of the present invention can comprise or, alternatively, be constituted by a network connection module configured to connect the module b) to the internet and/or intranet.

The system of the present invention, comprising or, alternatively, consists of a display and/or printing unit suitable for being connected to the acquisition and processing module b) and suitable for displaying and/or printing the obtained outputs.

The display and/or printing unit d) comprising or, alternatively, consists of a video apparatus suitable for displaying the output of the module b) and/or a local or network printer suitable to allow the printing of the output of module b).

The system of the present invention, comprising or, alternatively, also consists of a data storage unit which can be a local server, a network server, a local cloud, a network cloud suitable for being connected to the modules b), c) and d), and suitable for storing the data acquired and processed by module b).

An object of the present invention is a method for the design, management and implementation of energy and/or anti-seismic redevelopment interventions benefiting from tax benefits and/or assignment of tax credit and/or discount on the invoice comprising the following phases:

> a. receiving a set of data representing the project profiling;
> b. receiving a set of data representing the profiling of professionals;
> c. receiving a set of data representing the company profiling;
> d. performing the matching of the data acquired in phases a., b. and c;
> e. generating an output dataset of the results of step d;

According to an embodiment of the invention, the method of the invention is carried out by means of the system object of the invention.

According to a preferred embodiment of the invention, the method comprises any algorithm able to perform the matching on the basis of a set of input data of phases a., b., c..

According to an embodiment of the invention, the algorithm included in the method, able to carry out the matching on the basis of a set of input data of phases a., b., c., Is an algorithm of machine learning, preferably a linear algorithm.

According to an embodiment of the invention, the receipt of a data set of phase a. and/or b. and/or c. takes place by entering data, as reported below, via electronic media such as computers, smartphones, tablets.

Phases from a. to e. of the method of the invention can be described by the corresponding phases from i. to v. of module b) of the system of the invention.

The method of the invention can include a further phase f. data reception, wherein data relating to the KPIs are received similarly to what happens in phase vi. of the module b) of the system of the invention.

Through the use of the system and/or method of the present invention, a system and/or method is made available for the design, management and implementation of energy and/or anti-seismic redevelopment interventions benefiting from tax benefits and/or assignment of tax credit and/or discount on the invoice.

Through the use of the system and/or method of the present invention, a system and/or method is made available for the analysis and/or design, management and implementation of energy and/or anti-seismic requalification interventions benefiting from tax benefits and/or assignment of tax credit and/or discount on the invoice, through the use of big data analysis platforms and/or based on the logic of simple neural networks.

Through the use of the system and/or method of the present invention, a system and/or method is made available for the analysis and/or design, management and implementation of energy and/or anti-seismic requalification interventions benefiting from tax benefits and/or assignment of tax credit and/or discount on the invoice, through the use of machine learning algorithms and/or linear algorithms.

According to a preferred embodiment of the invention, the method can be carried out by software and/or through a computer.

In addition to providing a system and/or method in object, the embodiments of the present invention also include computer programs able to performe the operations of the method of the invention.

Computer systems and/or programs, according to some embodiments of the present invention, can be inserted into computer-readable storage media and/or defined with computer-readable program code embedded in the storage medium.

It will be understood that the method of the invention can be implemented by computer program instructions. These computer program instructions can be loaded into a computer, or other programmable apparatus, to produce the phases of the method such that the instructions that are executed on the computer, or other programmable apparatus, implement the specific functions of the invention method.

These computer program instructions may also be stored in a computer readable memory, which can direct a computer or other programmable apparatus to carry out the phases of the method, such that the instructions stored in the computer readable memory produce the method of the invention.

The method of the invention can also include the control, by the processor, of a display device and an input device to perform various operations.

The embodiments of the method of the invention can be implemented in hardware, firmware, software, or any combination thereof.

Embodiments can also be implemented as instructions stored on a machine-readable medium, which can be read and executed by one or more processor circuits (i.e. "processors").

A machine-readable medium can include any mechanism for storing or transmitting information in a machine-readable form (e.g. a processing device). Machine-readable medium may include, for example, read-only memory (ROM), random access memory (RAM), magnetic disk storage media, optical storage media, flash memory devices, optical electrical signals, acoustics or other forms of propagation (e.g. carrier waves, infrared signals, digital signals, etc.) and others.

The firmware, software routines and instructions of computer programs can be described herein as performing certain actions and/or operations.

However, such descriptions are for convenience of description only and are neither limiting nor exhaustive. These actions and/or operations indeed derive from IT devices, processors, controllers, or other devices that run firmware, software, routines, instructions, etc.

The method of the invention and/or the phases that make it up can be implemented as computer readable code (i.e. machine readable computer program instructions) which is executed by one or more processors to perform the operations of the forms of realization described.

The method of the invention and/or the phases that make it up may include components that can be implemented in the computer system using hardware, software, firmware, machine-readable media (i.e. machine-readable) on which the program instructions for computer, or a combination thereof can be stored, and may be implemented in one or more computers or computer systems or other processing systems.

If programmable logic is used, it can be performed on a commercially available processing platform or on a special purpose device. A person skilled in the art may understand that embodiments of the disclosed object can be practiced with various configurations of computer systems, including multi-core multiprocessor systems, minicomputers, mainframe computers, connected or clustered computers with distributed, as well as pervasive functions. or miniature computers that can be incorporated into virtually any device.

After reading this description, a person of ordinary experience in the subject technical fields will know how to implement the embodiments described using other computer systems and/or computer architectures. Although operations can be described as a sequential process, some of the operations can be performed in parallel, simultaneously and/or in a distributed environment and with program code, stored locally or remotely, for access by machines with single or multiprocessor processor. Also, in some embodiments, the order of operations can be rearranged without departing from the spirit of the described object.

People of ordinary skill in the relevant art will understand that a processing device for implementing the method and phases of the present invention has at least one processor, where the processor may be a single processor, a plurality of processors, a processor in a multi core, a multiprocessor system. This system can operate alone or in a cluster of computing devices operating in a cluster or server farm. The processor can be connected to a communication infrastructure, for example a bus, a message queue, a network or a multi-core message passing scheme.

People of ordinary skill in the relevant art will appreciate that the memory unit may include a machine-readable storage medium having computer software (i.e. computer program instructions) and/or data stored on it.

Computer programs (also called computer control logic or computer program instructions) are stored in the memory of the computer or other electronic system. Computer programs can also be received via the communication interface. These computer programs, when executed, allow the computer system to implement the method of the invention and/or the phases that comprise it. In particular, computer programs, when executed, allow the processor to implement the processes of the method of the invention. Consequently, these computer programs represent the controllers of the computer system. When an embodiment is implemented using software, it can be stored in a computer program and loaded into the computer system using the storage drive, interface and hard drive or communication interface.

A data processing apparatus and/or device and/or system may include any suitable machine-readable (i.e. computer-readable) storage device, on which the instructions of the computer program are stored.

The method of the invention can be implemented using implementations of software, hardware and/or operating systems other than those described here.

Any implementation of software, hardware and operating system suitable for carrying out the phases of the method of the invention can be used.

The embodiments are applicable to both a client and a server or a combination of both.

The description sets forth exemplary embodiments and, as such, is not intended to limit in any way the scope of the embodiments of the description itself and of the appended claims.

The method of the invention and the phases that make it up can be implemented through computer systems that allow its use and/or execution via computer networks or local and/or cloud computer networks.

The method of the invention and the phases that make it up can be implemented through computer systems that allow its use and/or execution via the internet or via the web.

A further object of the present invention is a data processing apparatus and/or device and/or system comprising a processor suitable for carrying out the phases of the method of the present invention.

The present invention further provides a computer program comprising instructions which, when the program is executed by a computer, cause the computer to perform the phases of the method of the present invention.

A further object of the invention is a machine-readable data carrier having stored on it the computer program comprising instructions which, when the program is executed by a computer, cause the computer to carry out the phases of the method of the present invention.

Finally, a further object is a machine-readable support comprising instructions which, when executed by a computer, cause the computer to perform the phases of the method of the invention.

The object of the invention is also the use of the system of the invention for the design, management, and implementation of energy and/or anti-seismic requalification interventions benefiting from tax benefits and/or assignment of tax credit and/or discount on the invoice.

A further object of the invention is the use of the method of the invention for the design, management, and implementation of energy and/or anti-seismic requalification interventions benefiting from tax benefits and/or assignment of tax credit and/or discount on invoice.

All of the features and preferred embodiments of the system and/or method of the present invention set forth above can be combined in any possible combination to describe the system and/or carry out the claimed method.

From the above description the advantages of the method of the present invention are evident which, albeit in its relatively simple implementation, simultaneously solves many problems present in the known art. Many modifications and/or other embodiments of the invention disclosed herein will come to mind to an expert in the art to which these inventions refer, having the benefit of the teachings presented in the previous descriptions and associated drawings. Therefore, such modifications and/or other embodiments of the invention will be included in the description of the invention itself. Therefore, it must be considered that the invention in question must not be limited to the specific embodiments described and that the modifications and/or other embodiments are to be understood as included within the scope of the attached claims. Although specific terms are employed here, they are used only in a generic, illustrative and descriptive sense and not for purposes of limitation.

Any suitable programming language can be used to implement the routines of particular embodiments, including C, C++, C#, .NET, Java, and assembly language. Various programming techniques such as procedural or object-oriented programming can be employed. Routines can run on a single computing device or on multiple processors. Although the phases, operations or calculations can be presented in a specific order, this order can be changed in several particular embodiments. In some particular embodiments, multiple phases shown as sequential in this disclosure can be performed simultaneously.

**Claims**

1. System for the design, management and implementation of energy and/or anti-seismic redevelopment interventions benefiting from tax benefits and/or assignment of tax credit and/or discount on the invoice, comprising or, alternatively, consisting of:

a) a communication interface configured for data entry;

b) a data acquisition and processing module, in communication with the communication interface a), configured for:

i. receiving a data set representing the project profiling;

ii. receiving a data set representing the profiling of professionals;

iii. receiving a data set representing the company profiling;

iv. performing the matching of the data acquired in phases i., ii. and iii.;

v. generating an output data set of the results of phase iv.;

c) a web connection module configured for connecting the module b) to the internet;

d) a display and/or printing unit designed to be connected to the acquisition and processing module b) and designed to display and/or print the obtained output.

2. System according to claim 1, wherein the data set acquired by module b) comprises:

- in phase i. descriptive of the type of building, energy certification, seismic certification, thermal system, required intervention;

- in phase ii. descriptive of professional title, technical skills, professional qualifications, professional registers, professional roles, professional insurance, operating range;

- in phase iii. descriptive of certifications, staff structure and resources, average order value, average turnover, professional roles, skills and scope of work, operating range.

3. System according to any one of claims 1 to 2, wherein the data acquisition and processing module b), comprise any algorithm able to perform the matching on the basis of a set of input data of phases i., ii., iii..

4. System according to any one of claims 1 to 3, wherein the data acquisition and processing module b) comprise machine-learning algorithms.

5. System according to any one of claims 1 to 4, where the linear algorithm is a linear function of the type:

$$F\_Matching = Weight\_Sede \left(\sum Value\_sede\right) + Weight\_Raggio \left(\sum Value\_radio\right) + Weight\_Netw$$

$$\left(\sum Value\_netw\right) + Weight\_Comm \left(\sum Value\_comm\right) + Weight\_Compet \left(\sum Value\_compet\right) +$$

$$Weight\_Qtifualif \left(\sum Value\_Certain\right) + Weight \left(Value\_stralue\right) + Weight \left(Value\_Cer.\right)$$

$$Weight\_Ruolo \left(\sum Value\_ruolo\right)$$

6. System according to any one of claims 1 to 5, wherein the matching of the data acquired in phases i., ii. and iii. takes place through the logic of simple neural networks.

7. System according to any one of claims 1 to 6, wherein the output data set of phase v. represents the ranking of matching between the data of phases i., ii. and iii..

8. System according to any one of claims 1 to 7, in which the activities for which the module b) is configured are carried out by means of a computer program.

9. A method for the design, management and implementation of energy and/or anti-seismic redevelopment interventions benefiting from tax benefits and/or transfer of tax credit and/or discount on the invoice, including the following phases:

a. receiving a set of data representing the project profiling;

b. receiving a set of data representing the profiling of professionals;

c. receiving a set of data representing the company's profiling;

d. performing the matching of the data acquired in phases a., b. and c.;

e. generating an output dataset of the results of phase d..

10. Method according to claim 9, wherein said method comprises any algorithm able to perform the matching on the basis of a set of input data of phases a., b., c..

11. Method according to claim 9, wherein said method is carried out by means of the system according to any one of claims 1 to 7.

12. A computer program comprising instructions which, when the program is executed by a computer, cause the computer to perform the phases of the method of any one of claims 9 to 10.

13. A machine-readable medium comprising instructions which, when executed by a computer, cause the computer to perform the phase of the method of any one of claims 9 to 10.

14. Use of a system according to any one of claims 1 to 7 for the design, management and implementation of energy and/or anti-seismic redevelopment interventions benefiting from tax benefits and/or assignment of tax credit and/or discount on the invoice.

## Figure 1

RETE NEURALE SEMPLICE

INPUT

OUTPUT

Legend
INPUT NODE
HIDDEN NODE
OUTPUT NODE

LAYER 1

INPUT NODE

LAYER 2

PROCESSING NODE

LAYER 3

OUTPUT NODE

## Figure 2

BUILD MODEL

Collect and load data

IDataView

Improve model

Evaluate()

Create pipeline

Append()

ITransformer

Train model

Fit()

IEstimator

ITransformer

Save model

Save()

USE MODEL

Load model

Load()

ITransformer

Make predictions

CreatePredictionEngine().
Predict()

P.I. EcoBonusItalia.Eu S.r.l.

# EP 4 102 444 A1

Europäisches
Patentamt

European
Patent Office

Office européen
des brevets

# EUROPEAN SEARCH REPORT

Application Number

EP 21 19 3680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 311 529 B1 (NOEL JAMES [US] ET AL) 4 June 2019 (2019-06-04) * column 1, line 29 – column 5, line 46 * * column 8, line 26 – column 26, line 64 * * figure 3 *  ----- | 1-14 | INV. G06Q50/08 G06Q10/06 |
| A | Anonymous: "Artificial intelligence – Wikipedia", Wikipedia, 29 October 2017 (2017-10-29), XP055434981, Retrieved from the Internet: URL:https://en.wikipedia.org/w/index.php?title=Artificial_intelligence&oldid=807620774 [retrieved on 2017-12-13] * the whole document *  ----- | 1-14 | |

TECHNICAL FIELDS
SEARCHED    (IPC)

G06Q

The present search report has been drawn up for all claims

| Place of search | Date of completion of the search | Examiner |
|---|---|---|
| The Hague | 3 February 2022 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

## ANNEX TO THE EUROPEAN SEARCH REPORT
## ON EUROPEAN PATENT APPLICATION NO.

EP 21 19 3680

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2022

| Patent document cited in search report | Publication date | Patent family member(s) | Publication date |
|---|---|---|---|
| US 10311529 B1 | 04-06-2019 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020106550 A1
- US 2017011318 A1
- US 5862223 A
- US 10867328 B2
- US 2014172479 A1